(19) Europäisches Patentamt
European Patent Office
Office européen des brevets

(11) **EP 2 383 234 B1**

(12) **EUROPEAN PATENT SPECIFICATION**

(45) Date of publication and mention
of the grant of the patent:
**10.01.2018 Bulletin 2018/02**

(51) Int Cl.:
**C03C 3/085** *(2006.01)* **C03B 25/02** *(2006.01)*
**C03B 25/08** *(2006.01)*

(21) Application number: **11163650.2**

(22) Date of filing: **26.04.2011**

(54) **Compositional control of fast relaxation in display glasses**

Zusammensetzungssteuerung zur schnellen Entspannung in Anzeigegläsern

Contrôle de la composition de la relaxation rapide dans des vitres d'affichage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2010 US 770291**

(43) Date of publication of application:
**02.11.2011 Bulletin 2011/44**

(73) Proprietor: **Corning Incorporated
Corning, NY 14831 (US)**

(72) Inventors:
• **Allan, Douglas Clippinger
Corning, NY 14830 (US)**
• **Ellison, Adam James
Painted Post, NY 14870 (US)**
• **Kiczenski, Timothy J.
Corning, NY 14830 (US)**

• **Mauro, John Christopher
Corning, NY 14830 (US)**
• **Welch, Roger C.
Owego, NY 13827 (US)**

(74) Representative: **Anderson, James Edward George
Elkington and Fife LLP
Prospect House
8 Pembroke Road
Sevenoaks, Kent TN13 1XR (GB)**

(56) References cited:
**WO-A2-2010/138793     US-A1- 2008 206 494
US-A1- 2009 286 091**

• **DATABASE WPI Week 200974 Thomson Scientific, London, GB; AN 2009-Q46095 XP002703225, -& WO 2009/131053 A1 (ASAHI GLASS CO LTD) 29 October 2009 (2009-10-29)**

**Description**

FIELD

This disclosure relates to glass substrates used in the manufacture of displays, e.g., liquid crystal displays (LCDs), and, in particular, to the dimensional changes which such substrates exhibit during a display manufacturing process.

BACKGROUND

As is well known, manufacturing processes for displays include processing steps which take place at elevated temperatures. The specific temperatures used depend on the type of display being manufactured. For example, displays which employ poly-silicon (p-Si) technology employ higher processing temperatures than displays based on amorphous silicon (a-Si displays).

As is also well known, large glass sheets are used as substrates in the display manufacturing process and thus are subjected to the elevated temperatures used in those processes. These elevated temperatures can cause the substrates to exhibit dimensional changes, i.e., compaction. Because the pixel sizes of modem displays are small, dimensional changes even as small as a few parts-per-million can compromise the quality of the finished display.

A number of approaches have been used to address the dimensional change problem. For example, substrates have been pre-compacted by being held at an elevated temperature for a period of time prior to use in a display manufacturing process. Such a heat treatment lowers the fictive temperature of the glass and thus the dimensional changes which the glass exhibits when raised to an elevated temperature (see Eq. (1) below). As other approaches, glass compositions have been developed which have higher strain points and/or higher annealing points and are thus more resistant to high temperature exposure.

Importantly, not all steps of a display manufacturing process are equally susceptible to dimensional change problems. Rather, such processes normally have a critical cycle during which dimensional changes in glass substrates (e.g., compaction of the substrates) have their most detrimental effects on the final displays.

The present disclosure is directed to reducing the dimensional changes which occur in such critical cycles. As such, the techniques disclosed herein can be used as additions to, or substitutes for, other techniques for reducing dimensional changes, such as those discussed above.

WO 2009/131053 A1 discloses a glass plate for display panels, which has low $B_2O_3$ content and low compaction, and can be used as a glass plate for TFT panels. The glass plate for display panels has a glass matrix composition consisting of, in mass% based on oxides, 50.0-73.0 of $SiO_2$, 6.0-20.0 of $Al_2O_3$, 0-2.0 of $B_2O_3$, 4.2-9.0 of MgO, 0-6.0 of CaO, 0-2.0 of SrO, 0-2.0 of BaO, 6.5-11.3 of MgO + CaO + SrO + BaO, 0-2.0 of $Li_2O$, 2.0-18.0 of $Na_2O$ 0-13.0 of $K_2O$ and 8.0-18.0 of $Li_2O$ + $Na_2O$ + $K_2O$, and a thermal shrinkage (C) of not more than 20 ppm.

US 2008/206494 A1 discloses a lass substrate for a display, which is formed of a glass having a light weight and having high refinability with decreasing environmental burdens, the glass comprising, by mass %, 50 to 70% of $SiO_2$, 5 to 18% of $B_2O_3$, 10 to 25% of $Al_2O_3$, 0 to 10% of MgO, 0 to 20% of CaO, 0 to 20% of SrO, 0 to 10% of BaO, 5 to 20% of RO (in which R is at least one member selected from the group consisting of Mg, Ca, Sr and Ba), and over 0.20% but not more than 2.0% of $R'_2O$ (in which R' is at least one member selected from the group consisting of Li, Na and K), and containing, by mass %, 0.05 to 1.5% of oxide of metal that changes in valence number in a molten glass, and substantially containing none of $As_2O_3$, $Sb_2O_3$ and PbO.

SUMMARY

In accordance with the invention, a method for reducing the dimensional changes of a glass sheet in a display manufacturing cycle is disclosed which includes altering the composition of the glass so as to increase the peak expansion of the glass during the cycle. The composition is thereby altered by doping the base composition with at least 0.25 mole percent and with at most 1.0 mole percent alkali metal oxide. Any features of the disclosure that are not in accordance with claim 1 are not according to the invention.

In accordance with an aspect of the disclosure not according to the invention, a glass sheet is disclosed for use as a substrate in a manufacturing process which produces a display device, said manufacturing process subjecting the sheet to at least a first and a second heating stage, the first heating stage being characterized by a maximum temperature T1 and a post-stage cooling rate r1 and the second heating stage being characterized by a maximum temperature T2 and a post-stage cooling rate r2, wherein:

$$(1) \quad T1 < T2 \text{ and } r1 = r2;$$

or

$$(2) \quad T1 = T2 \text{ and } r1 < r2;$$

or

$$(3) \quad T1 < T2 \text{ and } r1 < r2;$$

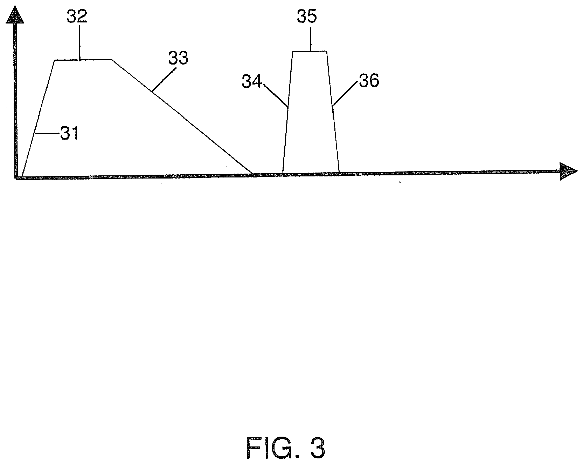

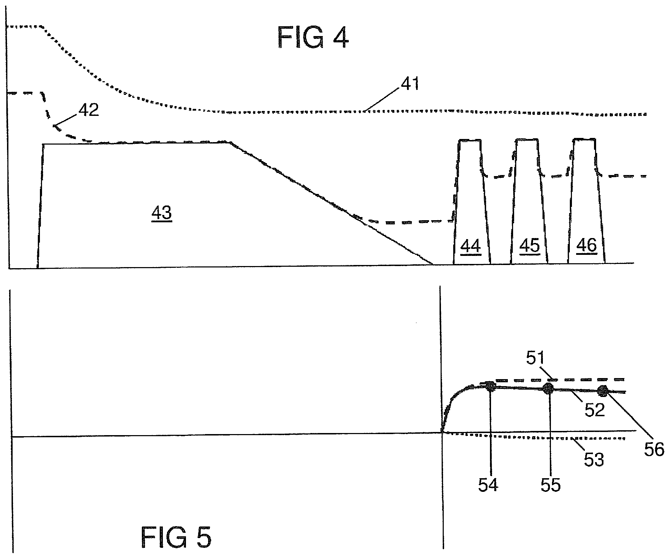

said glass sheet being produced by a process (e.g., a float or fusion process) which produces at least 500 pounds of glass per hour and comprising $SiO_2$, $Al_2O_3$, CaO, SrO, and MgO,

wherein when tested using a test procedure which includes a conditioning stage (31, 32, 33 in FIG. 3; 43 in FIG. 4) and a measurement stage (34, 35, 36 in FIG. 3; 44, 45, 46 in FIG. 4), the glass of the glass sheet, in the measurement stage (34, 35, 36 in FIG. 3; 44, 45, 46 in FIG. 4), exhibits an expansion peak in parts per million which is greater than EXPP, where $$EXPP = \frac{1.87}{\dfrac{T_{ann} - 4.5}{675} - 1} + 4.5,$$ where $T_{ann}$ is the glass's annealing point in °C,

said conditioning stage (31, 32, 33 in FIG. 3; 43 in FIG. 4) comprising three phases where:

(i) in phase 1, the glass is heated from 20°C to 675°C in two minutes (see 31 in FIG. 3);
(ii) in phase 2, the glass is held at 675°C for eight hours (see 32 in FIG. 3); and
(iii) in phase 3, the glass is cooled from 675°C to room temperature in 8 hours (see 33 in FIG. 3); and

said measurement stage (34, 35, 36 in FIG. 3; 44, 45, 46 in FIG. 4) comprising six sequential repetitions of the following three phases:

(i) in phase 1 for each repetition, the glass is heated from 20°C to 675°C in two minutes (see 34 in FIG. 3 which represents the first repetition);
(ii) in phase 2, the glass is subjected to a temperature of 675°C for 5 minutes for the first three repetitions, for 15 minutes for the fourth repetition, for 30 minutes for the fifth repetition, and for 60 minutes for the sixth repetition (120 cumulative minutes after the six repetitions) (see 35 in FIG. 3 which represents the first repetition); and
(iii) in phase 3 for each repetition, the glass is cooled from 675°C to 100°C in two minutes (see 36 in FIG. 3 which represents the first repetition);

with dimensional changes being measured after phase 3 of each measurement stage repetition.

In accordance with a further aspect of the disclosure not according to the invention, a method is disclosed for distinguishing the effects of fast and slow relaxers in a glass which includes: (i) a conditioning stage (31, 32, 33 in FIG. 3; 43 in FIG. 4) in which the glass is heated (31) to a preselected elevated temperature, held (32) at that temperature, and then cooled (33), and (ii) a measurement stage (34, 35, 36 in FIG. 3; 44, 45, 46 in FIG. 4) in which the glass is heated (34) to the same preselected temperature, held (35) at that temperature, and then cooled (36), wherein the holding (32, 35) at the elevated temperature is longer for the conditioning stage than the measurement stage and the cooling (33, 36) for the conditioning stage is slower than the cooling for the measurement stage. In certain embodiments, the heating (34), holding (35), and cooling (36) of the measurement stage is repeated multiple times.

The reference numbers used in the above summaries of the various aspects of the disclosure are only for the convenience of the reader and are not intended to and should not be interpreted as limiting the scope of the invention. More generally, it is to be understood that both the foregoing general description and the following detailed description are merely exemplary of the invention and are intended to provide an overview or framework for understanding the nature and character of the invention.

BRIEF DESCRIPTION OF THE DRAWINGS

FIG. 1 is a plot of dimensional change (vertical axis) in ppm versus time (horizontal axis) in minutes for a representative display glass (Coming Incorporated's JADE® glass) held at 450°C.

FIG. 2 is a plot of dimensional change (vertical axis) in ppm versus time (horizontal axis) in minutes for four glasses produced in production quantities and subjected to step changes in temperature of durations 4, 8, and 12 minutes. The 30 second data points are based on an exponential fit to the 4, 8, and 12 minute values.

FIG. 3 is a plot of temperature (vertical axis) versus time (horizontal axis) for a test procedure which can be used to observe fast relaxation in a display glass. The times, temperatures, and slopes shown in this figure are not to scale. The test procedure includes a conditioning stage 31, 32, 33 and a measurement stage 34, 35, 36.

FIG. 4 is a schematic diagram illustrating an embodiment of the test procedure of FIG. 3. The vertical axis is temperature for heating periods 43, 44, 45, 46 and fictive temperature for curves 41 and 42; the horizontal axis is time. The diagram is not to scale.

FIG. 5 is a schematic diagram illustrating dimensional changes as a result of the measurement stage of the testing procedure of FIG. 4. The vertical axis is dimensional change in, for example, parts-per-million (ppm) and the horizontal scale is time. The diagram is not to scale.

FIG. 6 is a plot illustrating the effect of batched $Li_2O$ on fast relaxation. The vertical scale is dimensional change in ppm; the horizontal scale is time in minutes.

FIG. 7 is a plot illustrating the effect of water content on fast relaxation. The vertical scale is dimensional change in ppm; the horizontal scale is time in minutes.

FIG. 8 is a schematic diagram illustrating the effect of maximum expansion on the final dimensional change during a critical thermal cycle of a display manufacturing process. The upper portion of the figure illustrates the critical thermal cycle and the lower portion illustrates the dimensional change of the glass substrate. The horizontal axis is time for both the upper and lower portions of the figure; the vertical axis is temperature for the upper portion and dimensional change for the lower portion.

FIG. 9 is a plot of dimensional change (vertical axis) in ppm versus time (horizontal axis) in minutes for six production glasses and three developmental glasses tested in accordance with the procedure illustrated in FIG. 4.

FIG. 10 is a plot of peak expansion versus annealing point for the nine glasses of FIG. 9.

FIG. 11 is a schematic diagram illustrating calculated dimensional changes for two glasses which exhibit different levels of fast relaxation in a critical thermal cycle of a display manufacturing process. The horizontal axis is time in minutes and the vertical axis is dimensional change in ppm.

## DETAILED DESCRIPTION

When a glass melt is cooled rapidly from high temperature, the movement of atoms within the cooling liquid slows down with decreasing temperature and eventually diminishes to oscillations about fixed positions due to the normal thermal population of vibrational states. These positions are typically not those that would be adopted were the glass to be held for an extended period of time (ranging from seconds to days) at intermediate temperatures (e.g., the glass transition temperature or the strain or annealing points). As a consequence, when a rapidly quenched glass is reheated to intermediate temperatures, the thermally-populated vibrational states allow for relaxation of atoms into positions that better satisfy their individual and collective bonding requirements. Since this is typically accompanied by a decrease in the physical dimensions of a bulk piece of glass, thermal relaxation upon reheating is said to produce compaction of the glass.

The amount of compaction exhibited by any particular sample of glass upon reheating will depend on the glass's fictive temperature at the beginning of the reheating, i.e., $T_f(t_0)$, and on the change in the fictive temperature over the course of the reheating, i.e., $T_f(t)$. The changes in fictive temperature with time resulting from a reheating to a temperature T can be described by the following equation:

$$(T_f(t) - T) = (T_f(t_0) - T) * \exp\left[(-t/\tau(T))^b\right] \qquad \text{Eq. (1)}$$

where b is a "stretching constant" and $\tau(T)$ is the relaxation time of the glass at the heat treatment temperature.

The relaxation time of the glass at a given temperature T can be approximated by the equation:

$$\tau(T) \approx \eta(T) / G \qquad \text{Eq. (2)}$$

where $\eta(T)$ is the glass's shear viscosity at the given temperature and G is the glass's shear modulus which scales the viscosity into time space and to a first approximation is independent of temperature.

As can be seen from Equations (1) and (2), as the relaxation time is increased, e.g., by increasing $\eta(T)$, the change in fictive temperature of the glass in a set amount of time is significantly reduced, thereby reducing the measured compaction in a set thermal cycle.

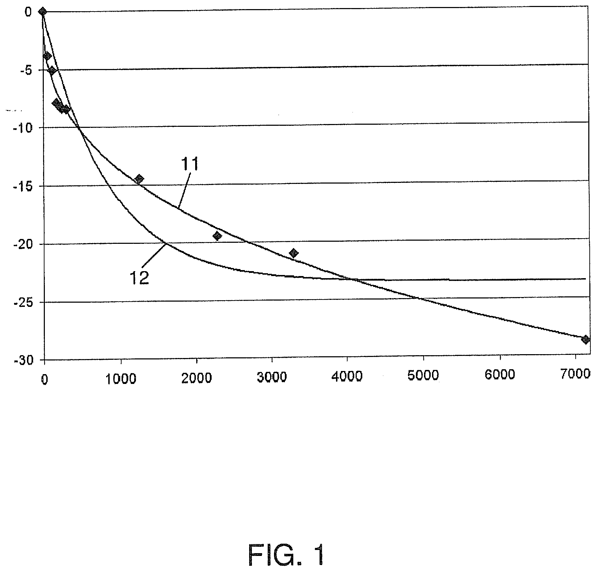

While fictive temperature is commonly referred to as a single temperature for a given quench rate, this is merely a convenience of language since experimental evidence has clearly demonstrated the presence of a distribution of relaxation times in glasses of the type used as display substrates. In FIG. 1, dimensional change data (compaction data) are fit with both a single exponential (curve 12) and with a stretched exponential (curve 11). If the data were able to be well fit with a single exponential, that would be representative of a single relaxation time. The fact that a stretched exponential is needed is clear evidence that multiple relaxation times are in effect.

In accordance with the present disclosure, it has been discovered that the dimensional behavior of a glass when subjected to a thermal cycle of the type used in the manufacturing of displays can be reasonably approximated and controlled by considering the glass as being composed of two populations of relaxing species, i.e., "fast relaxers" and "slow relaxers." In particular, the fast relaxer/slow relaxer approach to controlling dimensional changes is applicable to thermal cycles in which a glass sheet is subjected to at least a first and a second heating stage, the first heating stage being characterized by a maximum temperature T1 and a post-stage cooling rate r1 and the second heating stage being characterized by a maximum temperature T2 and a post-stage cooling rate r2, wherein:

$$(1) \qquad T1 < T2 \text{ and } r1 = r2;$$

or

$$(2) \qquad T1 = T2 \text{ and } r1 < r2;$$

or

$$(3) \qquad T1 < T2 \text{ and } r1 < r2.$$

The critical thermal cycle in a display manufacturing process is normally the second heating stage of such a two stage heating process and thus the ability to control the dimensional changes of a glass sheet during such a second heating stage through adjustment of the relative amounts of fast and slow relaxers in the glass making up the sheet constitutes an important contribution to display manufacturing process.

Generally, slow relaxers are involved in the dimensional changes which are described by the glass's viscosity versus temperature behavior, e.g., the glass's annealing temperature (i.e., the temperature at which the glass has a viscosity of $10^{13.18}$ poise). In particular, as used herein, slow relaxers are the relaxers whose behavior can to a first approximation be described by Eq. (2), while fast relaxers are those that have relaxation times faster than that predicted by Eq. (2).

In practice, the presence of slow and fast relaxers can cause a glass to exhibit dimension changes when subjected to a temperature step which are biphasic. Specifically, the glass can undergo an expansion followed by a contraction. This is especially so in short thermal cycles, such as the critical "rapid thermal anneal" or "RTA" commonly used in display manufacture, where the fast relaxers are able to play a significant role in the net dimensional change of the glass by causing expansion at short times instead of the traditional compaction.

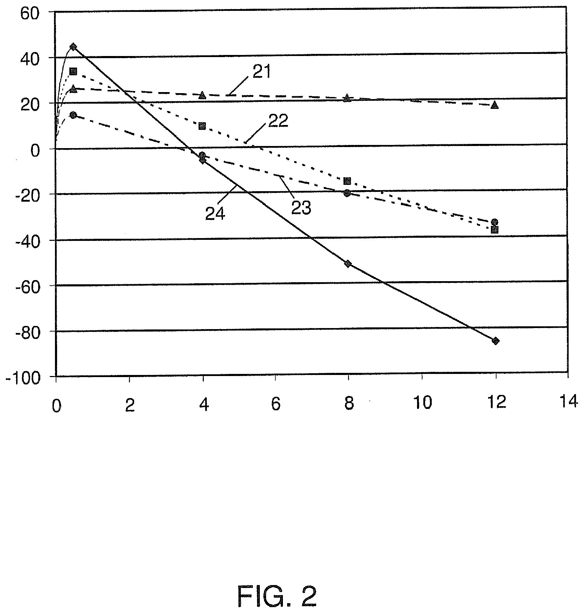

FIG. 2 illustrates this effect for four glasses produced in production quantities. In this figure, the glasses were subjected to an elevated temperature for periods of 4, 8, and 12 minutes. The resulting dimensional changes were measured after the glasses were cooled to room temperature and an exponential function was fit to the measured data and used to predict the dimensional changes at 30 seconds. As can be seen in FIG. 2, the ultimate dimensional change varies widely between the glasses and depends on both the peak expansion and the slope of the curve following the peak expansion. In particular, curve 21 illustrates a glass which exhibits only expansion over the test period, curve 24 illustrates a glass which exhibits a large peak expansion followed by a strong contraction, and curves 22 and 23 illustrate intermediate behaviors with widely-separated zero crossing points.

In accordance with the present disclosure, it has been determined that the overall behavior shown in FIG. 2 can be controlled by selecting/adjusting the amount of fast relaxers in the glass. To do so, however, requires the ability to distinguish the effects of fast relaxers from those of slow relaxers. FIG. 3 shows a test procedure for obtaining such a separation between the effects of the slow and fast relaxers.

As can be seen in this figure, the test procedure includes a conditioning stage (31, 32, 33 in FIG. 3; 43 in FIG.

4) and a measurement stage (34, 35, 36 in FIG. 3; 44, 45, 46 in FIG. 4). The conditioning stage includes three phases where:

> (i) in phase 1, the glass is heated from 20°C to 675°C in two minutes (see 31 in FIG. 3);
> (ii) in phase 2, the glass is held at 675°C for eight hours (see 32 in FIG. 3); and
> (iii) in phase 3, the glass is cooled from 675°C to room temperature in 8 hours (see 33 in FIG. 3);

and, in certain embodiments, the measurement stage includes six sequential repetitions of the following three phases:

> (i) in phase 1 for each repetition, the glass is heated from 20°C to 675°C in two minutes (see 34 in FIG. 3 which represents the first repetition);
> (ii) in phase 2, the glass is subjected to a temperature of 675°C for 5 minutes for the first three repetitions, for 15 minutes for the fourth repetition, for 30 minutes for the fifth repetition, and for 60 minutes for the sixth repetition (120 cumulative minutes after the six repetitions) (see 35 in FIG. 3 which represents the first repetition); and
> (iii) in phase 3 for each repetition, the glass is cooled from 675°C to 100°C in two minutes (see 36 in FIG. 3 which represents the first repetition);

with dimensional changes being measured after phase 3 of each measurement stage repetition. The dimensional changes can be determined in various ways using commercially available or customized equipment. For example, dimensional changes can be determined by scribing fiducial lines around a sample's edges and then measuring changes in the perimeter using, for example, a Mitutoyo Apex Vision System.

As persons skilled in the art will recognize from the present disclosure, test procedures employing other times, temperatures, and numbers of measurement stage repetitions can be used to distinguish the effects of fast relaxers from slow relaxers, provided the procedure employs a conditioning stage which has a long hold at a preselected elevated temperature and a slow quench rate followed by a measurement stage which uses the same preselected temperature and a faster quench rate.

In general terms, the conditioning stage of the test procedure serves to drastically reduce the contribution of slow relaxing species to the measured dimensional changes in the measurement stage. Typically, the glass sample will exhibit a dimensional change (compaction) on the order of 3300-1500 ppm during the conditioning stage. In addition to shutting down the slow relaxers, the conditioning stage sets the fast relaxers in a low fictive temperature state so that they will expand in the measurement stage. The relative amount of observed expansion in the measurement stage can then serve as a measure of the fast relaxers present in the glass of interest.

The ability of the procedure of FIG. 3 to separate the behavior of slow and fast relaxers can be understood through reference to FIGS. 4 and 5. Curves 41 and 42 of FIG. 4 respectively plot the fictive temperatures of the slow and fast relaxers as a function of time during the test procedure. As shown in this figure, the first part of the test procedure (the conditioning stage) shuts down the slow relaxers, i.e., curve 41 of FIG. 4 is essentially flat by the end of conditioning stage 43 and remains essentially flat during the measurement stage, i.e., during the heating/fast quenching steps 44, 45, and 46 in FIG. 4.

FIG. 5 illustrates the dimensional changes that take place during the measurement stage. In particular, curve 51 shows the dimensional changes attributable to the fast relaxers, curve 53 that due to the slow relaxers, and curve 52 the combined dimensional changes which result in measured data points 54, 55, and 56, e.g., the dimensional changes at 5, 10, and 15 minutes which in the experimental results presented below are averaged to provide a measure of the glass's expansion peak. As these curves illustrate, because the slow relaxers have been substantially shut down by the conditioning stage, the fast relaxers are able to produce substantial observable expansion behavior during the measurement stage.

Using the testing procedure of FIGS. 3-5, the effects of compositional changes on fast relaxation can be determined. The compositional change approach to enhancing the effect of fast relaxers can be applied to a variety of display glasses now known or subsequently developed. As known in the art, in general terms, display glasses include $SiO_2$ and $Al_2O_3$ as glass formers and CaO, SrO, and MgO as components for modifying the properties of the glass, e.g., the glass's CTE, strain point, annealing point, melting point, viscosity, etc. In addition to these components, the glasses can include a variety of other constituents, e.g., $B_2O_3$, BaO, fining agents, and the like. Examples of the types of glasses to which the present disclosure can be applied include Coming's fusion-formed 1737, EAGLE XG®, and JADE® glasses, NEG's OA10 and OA10G, and Asahi's float-formed AN-100 glass. The dimensional behavior of these commercially-available glasses when tested using the procedures of FIGS. 3-5 is set forth below in Tables 1-3, where 91 identifies OA10, 92 represents OA10G, 93 represents Coming's 1737 glass which has been subjected to pre-compaction, 94 represents Asahi's AN-100 glass, 595 represents Coming's EAGLE XG® glass, and 696 represents Coming's JADE® glass.

A variety of compositional changes can be used to manipulate the contribution of fast relaxation to a glass's overall dimensional changes during a thermal cycle. In the typical case, the compositional changes are based on minor components of the glass, as opposed to the basic glass formers and modifiers. Indeed, the compositional changes will normally be at a level which can be characterized as a form of "doping" of the base glass to provide it with desired expansion/compaction properties.

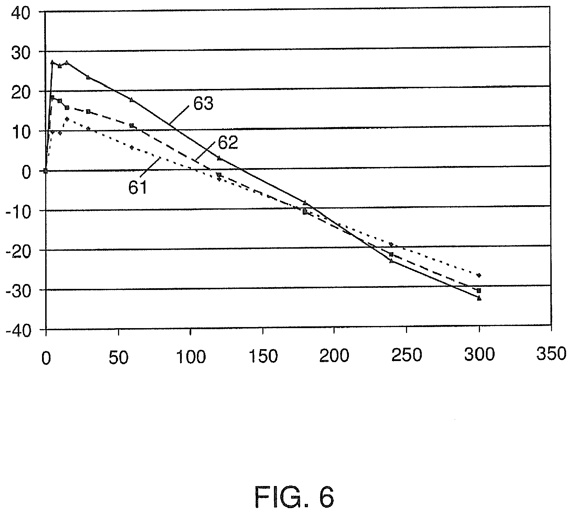

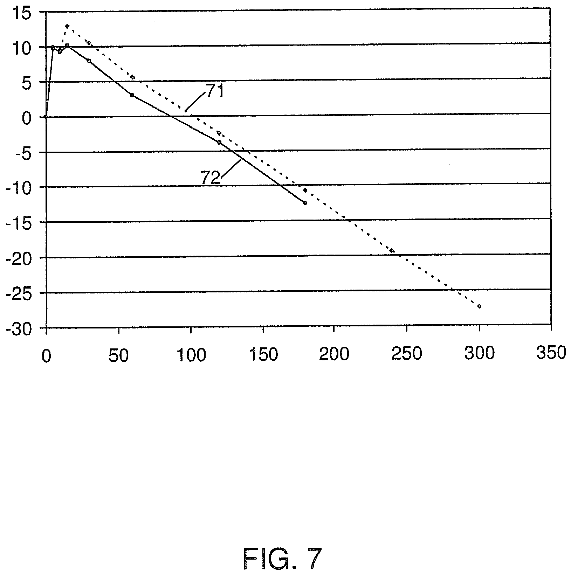

FIGS. 6 and 7 illustrate particular, non-limiting, examples of the use of low amounts of additives to alter the dimensional behavior of a base glass. In particular, FIG. 6 shows the effect of alkali addition and FIG. 7, the effect of water content. The curves in these figures are dimensional change versus time profiles obtained using the test procedure described above. The dimensional behavior of the base glass is shown by curve 61 in FIG. 6 and curve 72 in FIG. 7. To eliminate the effects of water, the batch materials used to make the base glass were calcined overnight at 225°C. Curves 62 and 63 in FIG. 6 show, respectively, the effects of the addition of 0.25 mol% and 1.0 mol% $Li_2O$ to the base glass, while curve 71 in FIG. 7 shows the effect of using wetter batch materials, i.e., materials that had not undergone an additional calcine step at 225°C overnight before melting. The measured values plotted in FIG. 6 are shown in Table 1.

The errors associated with the dimensional measurements were on the order of $\pm 3$ ppm and thus a further analysis was made of the data of FIG. 7. In particular, polynomial fits were made to curves 71 and 72 and the values of each of the parameters from the polynomial curves were compared. Each of the parameters for the dry sample (curve 72) were all outside the 95% confidence limits for the respective parameters for the wet sample (curve 71), leading to the conclusion that the curves were statistically different from each other and this difference was clearly resolved in the longer times.

As can be seen FIGS. 6 and 7, increasing alkali (curves 62 and 63) and increasing water content (curve 71) lead to higher expansions and, at least to some extent, steeper slopes for the profiles. The alkali curves are particularly important because they definitively showed a direct correlation of increased expansion (and therefore fast relaxation) with increased alkali content, i.e., the three glasses expanded~10ppm, ~18ppm, and ~26ppm with added $Li_2O$ of zero, 0.25 mol%, and 1.0 mol%. Moreover, with only a 0.25 mol% addition of $Li_2O$, the compaction after 120 minutes decreased from -4ppm to -1ppm. This is a significant result in and of itself but it becomes even more important when the annealing point is considered, i.e., the $Li_2O$-containing glass had an 11 °C lower annealing point than the $Li_2O$-fre glass, meaning that the lower annealing point glass compacted less than the higher annealing point glass, which is unexpected.

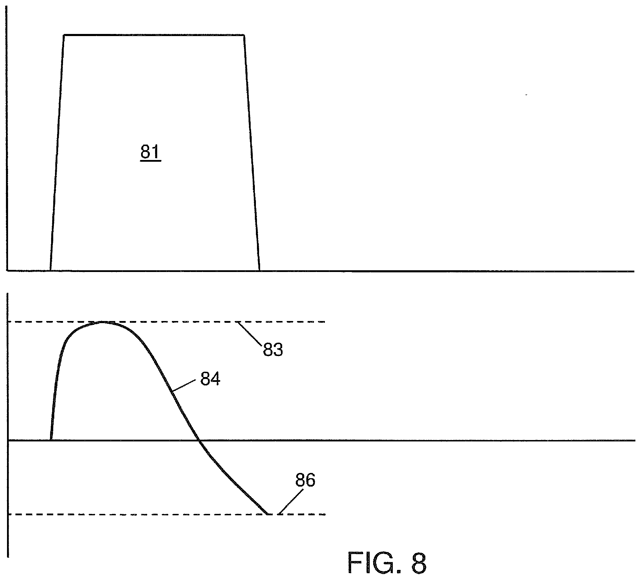

As discussed above, in accordance with the present disclosure dimensional change control is directed to a critical thermal cycle of a display manufacturing process. FIG. 8 illustrates the strategy. In this figure, 81 is the critical thermal cycle, 84 is the dimensional change versus time curve exhibited by the substrate during the cycle, and 83 and 86 are, respectively, the substrate's peak and final dimensional changes. As can be seen in this figure, to achieve a particular value of dimensional change at the end of a critical cycle involves both controlling the expansion peak and the slope of the subsequent contraction. As shown in FIGS. 6 and 7, changes in the expansion peak can be associated with changes in the slope of the contraction phase of the dimensional change versus time curve.

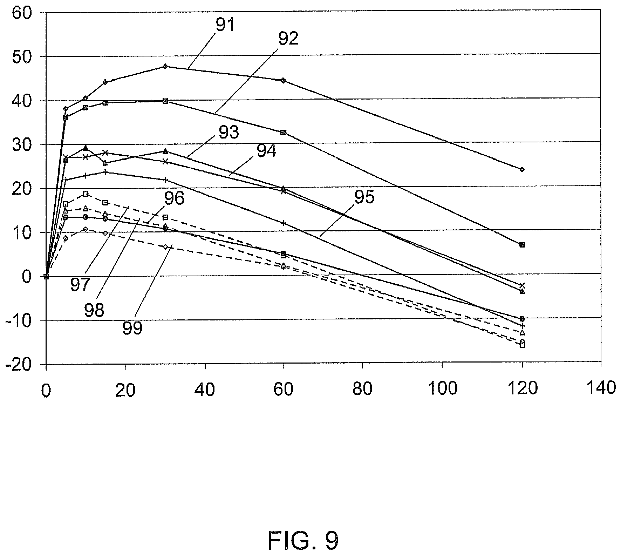

FIG. 9 further illustrates this effect for a variety of glasses produced in substantial quantities, e.g., at a rate of more than 500 pounds per hour. Because the glasses were produced in substantial quantities, the batch materials employed were those available in commercial quantities and thus the glasses have the conventional water and alkali levels associated with such batch materials. The great variety of peak expansion values and slopes exhibited by display glasses is evident from this figure. The specific values plotted are shown in Table 1. Peak and "after peak slope" values (i.e., after peak slope = 60min -120min values) are shown in Table 2.

In general terms, the slope of the dimensional change versus time curve after the expansion peak (hereinafter, the "after peak slope") is a function of the glass's annealing point. Specifically, as the annealing point goes up, the after peak slope goes down. Accordingly, if in raising the expansion peak, the annealing point is reduced, the net effect on overall dimensional stability may be small since the increased peak will be canceled out by the increased after peak slope. As a point of reference, the annealing point of the preferred glasses for use as substrates is greater than 700°C, more preferably greater than 720°C, more preferably greater than 740°C, more preferably greater than 760°C, more preferably greater than 780°C, and more preferably greater than 800°C.

In accordance with the present disclosure, it has been found that when control of the relative contributions of fast and slow relaxation is not performed, display glasses exhibit expansion peaks which vary with annealing point in accordance with the following equation:

$$\text{Expansion} = \frac{1.87}{\dfrac{T_{ann}}{675} - 1} \qquad \text{Eq. (3)}$$

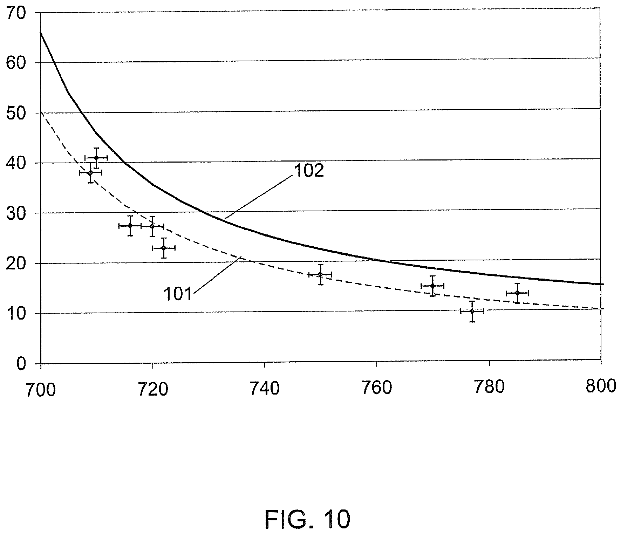

where $T_{ann}$ is the annealing point of the glass (in °C), 675 is the heat treatment temperature used in this cycle (in °C), and 1.87 is a fitting parameter. FIG. 10 illustrates this relationship for the glasses of FIG. 9. Line 101 in this figure is a fit to the plotted data points, i.e., line 101 satisfies the foregoing equation. The $R^2$ value for this fit was 0.93. The values plotted are set forth in Table 2.

As can be seen in this graph, as the peak goes up, the annealing temperature goes down. Accordingly, as discussed above, the after peak slope of the dimensional change versus time curve goes up. That is, for the conventional glasses of FIG. 9, increases in peak expansion are ineffective in reducing overall dimensional changes because such increases are associated with increases in the after peak slope of the dimensional change versus time curve, which increases cancel out the effect of the peak increase. In fact, in shorter cycles more like typical RTA cycles, reductions in the annealing point of a glass through traditional compositional methods will dominate the overall dimensional change and cause worse overall dimensional change relative to the original glass, even despite a slight increase in fast relaxation. However, for the glasses disclosed herein in which the composition is controlled so as to disproportionately increase the relative amount of fast relaxers, the peak can be made to go up faster than the annealing temperature goes down, i.e., the peak can be made to go up faster than the after peak slope goes up. Table 3 illustrates this effect, where the cutoff for glasses in which the linkage between peak values and after peak slopes has been broken (line 102 in FIG. 10) is given by the equation:

$$\text{Expansion Peak} > \text{EXPP} \qquad \text{Eq. (4)}$$

where

$$\text{EXPP} = \frac{1.87}{\dfrac{T_{ann} - 4.5}{675} - 1} + 4.5 \qquad \text{Eq. (5).}$$

As can be seen in Table 3, only the glasses in which the number of fast relaxers has been increased, i.e., glasses 62 and 63, which include 0.25 and 1.0 mol% $Li_2O$, respectively, satisfy Eq. (4).

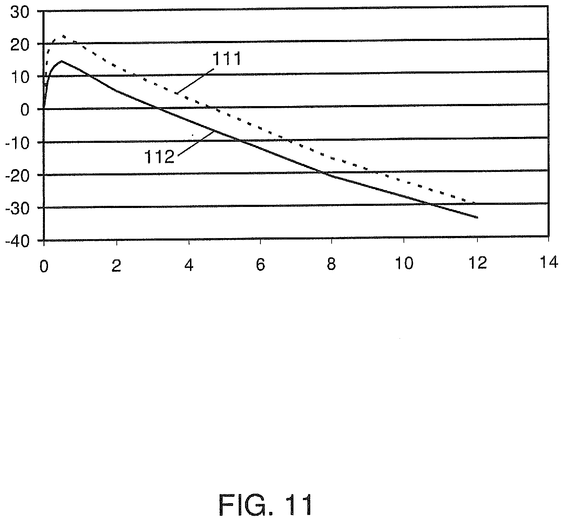

FIG. 11 is a graphical representation of the advantages achievable using the fast relaxer control technology of the present disclosure. This figure shows calculated dimensional changes during a representative critical cycle of a display manufacturing process for a glass without fast relaxation control (curve 112) versus one with fast relaxation control (curve 111). As can be seen, by increasing the relative population of fast relaxers by a relatively small amount, an improvement in the overall dimensional change on the order of, for example, 5-10 ppm can be readily achieved. Such a compaction reduction represents a significant improvement in terms of display manufacture and constitutes an important benefit provided by the technology disclosed herein.

In summary, as the foregoing illustrates, control of the level of fast relaxing species of a glass substrate allow their expansion to counteract the compaction of slow relaxing species during a critical thermal cycle of a display manufacturing process. In this way the overall changes in the dimensions of the substrate can be reduced, i.e., compaction can be minimized. Such reduced compaction is in itself desirable. Moreover, it can allow the use of glass compositions with, for example, lower annealing points than would otherwise be required. This, in turn, can permit the use of compositions having other desirable characteristics, e.g., better melting/fining characteristics, which represents another important benefit of this technology.

## TABLE 1

| Min @ 675°C | 91 | 92 | 93 | 94 | 95 | 96 | 97* | 98 | 99 |
|---|---|---|---|---|---|---|---|---|---|
| 0 | 0.0 | 0.0 | 0.0 | 0.0 | 0.0 | 0.0 | 0.0 | 0.0 | 0.0 |
| 5 | 38.1 | 36.2 | 26.6 | 27.0 | 22.0 | 13.4 | 16.4 | 14.9 | 8.7 |
| 10 | 40.5 | 38.4 | 29.2 | 27.1 | 22.9 | 13.5 | 18.7 | 15.4 | 10.7 |
| 15 | 44.1 | 39.4 | 25.9 | 28.0 | 23.7 | 13.0 | 16.7 | 14.2 | 9.8 |
| 30 | 47.6 | 39.8 | 28.4 | 26.0 | 21.9 | 10.7 | 13.3 | 11.2 | 6.6 |
| 60 | 44.3 | 32.5 | 19.7 | 19.0 | 11.8 | 5.0 | 4.5 | 2.2 | 1.9 |
| 120 | 23.8 | 6.6 | -3.9 | -2.6 | -11.8 | -10.2 | -16.2 | -13.3 | -15.4 |

### TABLE 1 (CONTINUED)

| Min @ 675°C | 61 | 62 | 63 |
|---|---|---|---|
| 0 | 0.0 | 0.0 | 0.0 |
| 5 | 9.7 | 18.3 | 27.3 |
| 10 | 9.6 | 17.5 | 26.3 |
| 15 | 12.9 | 15.8 | 27.1 |
| 30 | 10.5 | 14.7 | 23.4 |
| 60 | 5.6 | 11.1 | 17.7 |
| 120 | -2.5 | -1.5 | 2.8 |

\* Research Glass

## TABLE 2

| | 91 | 92 | 93 | 94 | 95 | 96 | 97* | 98 | 99 |
|---|---|---|---|---|---|---|---|---|---|
| Peak** (ppm) | 40.9 | 38.0 | 27.2 | 27.4 | 22.9 | 13.3 | 17.3 | 14.9 | 9.7 |
| Annealing point (°C) | 710 | 709 | 720 | 716 | 722 | 785 | 750 | 770 | 777 |
| 60min – 120min (ppm) | 20.5 | 25.8 | 23.7 | 21.7 | 23.6 | 15.2 | 20.6 | 15.5 | 17.3 |

### TABLE 2 (CONTINUED)

| | 61 | 62 | 63 |
|---|---|---|---|
| Peak** (ppm) | 10.7 | 17.2 | 26.9 |
| Annealing point (°C) | 799 | 795 | 765 |

| 60min60min – 120min (ppm) | 8.1 | 12.5 | 14.9 |
|---|---|---|---|

\* Research Glass; ** Average of 5, 10, and 15 minute expansion values.

TABLE 3

| Glass | 91 | 92 | 93 | 94 | 95 | 96 | 97* | 98 | 99 |
|---|---|---|---|---|---|---|---|---|---|
| Annealing point (ºC) | 710 | 709 | 720 | 716 | 722 | 785 | 750 | 770 | 777 |
| Measured Peak** (ppm) | 40.9 | 38.0 | 27.2 | 27.4 | 22.9 | 13.3 | 17.3 | 14.9 | 9.7 |
| Eq. (5) (ppm) | 45.8 | 47.2 | 35.6 | 39.0 | 34.1 | 16.4 | 22.4 | 18.4 | 17.4 |

TABLE 3 (CONTINUED)

| Glass | 61 | 62 | 63 |
|---|---|---|---|
| Annealing point (ºC) | 799 | 795 | 765 |
| Measured Peak** (ppm) | 10.7 | 17.2 | 26.9 |
| Eq. (5) (ppm) | 15.0 | 15.4 | 19.2 |

\* Research Glass; \*\* Average of 5, 10, and 15 minute expansion values.

**Claims**

1. A method for reducing the dimensional changes of a glass sheet in a display manufacturing cycle comprising changing a base composition of the glass by doping the base composition with at least 0.25 mole percent and with at most 1.0 mole percent alkali metal oxide so as to increase the peak expansion of the glass during the cycle.

**Patentansprüche**

1. Verfahren zum Verringern der Maßänderungen einer Glasscheibe in einem Display-Herstellungszyklus, umfassend das Wechseln einer Basiszusammensetzung des Glases durch Dotieren der Basiszusammensetzung mit mindestens 0,25 Mol-% und mit höchstens 1,0 Mol-% Alkali-Metalloxid, um die Höchstwertausdehnung des Glases während des Zyklus zu erhöhen.

**Revendications**

1. Procédé permettant de réduire les modifications dimensionnelles d'une feuille en verre dans un cycle de fabrication de dispositif d'affichage comprenant la modification d'une composition de base du verre en dopant la composition de base avec au moins 0,25 pour cent en mole et au plus 1,0 pour cent en mole d'oxyde de métal alcalin de façon à augmenter l'expansion de pic de verre durant le cycle.

FIG. 1

FIG. 2

FIG. 3

EP 2 383 234 B1

# FIG 4

41

42

43

44  45  46

# FIG 5

51

52

53

54  55  56

FIG. 6

FIG. 7

FIG. 8

FIG. 9

FIG. 10

FIG. 11

## REFERENCES CITED IN THE DESCRIPTION

**Patent documents cited in the description**

- WO 2009131053 A1
- US 2008206494 A1